# EUROPEAN PATENT SPECIFICATION

(11) **EP 1 141 933 B1**
(45) Date of publication and mention of the grant of the patent: **13.09.2006**
(21) Application number: 99962314.3
(22) Date of filing: 16.12.1999
(51) Int. Cl.: G09G 3/20, G09G 3/34

(54) **MODIFIED WEIGHTED BIT PLANES FOR DISPLAYING GREY LEVELS ON OPTICAL ARRAYS**
MODIFIZIERTE GEWOGENE BIT-EBENE ZUR GRAUSTUFENANZEIGE IN OPTISCHEN ANORDNUNGEN
TABLES MODIFIEES DE BITS PONDERES POUR L'AFFICHAGE DE NIVEAUX DE GRIS SUR DES ENSEMBLES OPTIQUES

(30) Priority: 19.12.1998 GB 9827944
(43) Date of publication of application: 10.10.2001
(73) Proprietor: THE SECRETARY OF STATE FOR DEFENCE, Farnborough, Hampshire GU14 0LX (GB)
(72) Inventor: COKER, Timothy, Martin, Peterborough PE8 4DZ (GB); CROSSLAND, William, Alden, University of Cambridge, Cambridge CB2 1PZ (GB)
(86) International application number: PCT/GB1999/004260
(87) International publication number: WO 2000/038162

(56) References cited:
- EP-A- 0 720 139
- EP-A- 0 774 745
- US-A- 4 775 891
- PATENT ABSTRACTS OF JAPAN vol. 17, no. 498 (P-1609), 8 September 1993 (1993-09-08) -& JP 05 127612 A (NIPPON HOSO KYOKAI), 25 May 1993 (1993-05-25)

## Description

The present invention relates to liquid crystal display apparatus, and to methods of operating a display or spatial light modulator, in which the instantaneous intensity distribution afforded by the display or modulator is binary in nature but which is altered in a manner such that the time averaged distribution effectively has, or appears to have, multiple intensity levels. For display purposes, this means that the alteration must be sufficiently fast for averaging to occur at the eye, preferably avoiding any flicker. This requirement may or may not apply for other purposes.

The methods of the invention can be used in conjunction with any spatial light modulator capable of producing a binary image, including those comprising an array of individually addressable cells or pixels, and those where the binary image is produced by scanning of a modulated light beam, for example. The term " binary spatial light modulator " used herein is intended to encompass all such devices, whether they are used for display or other purposes, for example information recordal, and variable components (for example lenses, filters and diffraction gratings) in optical systems. The term is intended to cover passive modulators where an existing light beam is affected by the modulator, and also those which act as light sources, for example arrays of light emitters, and electroluminescent devices. The apparatus of the invention includes a passive binary spatial light modulator in the form of an array of liquid crystal pixels.

The term "image" as used herein is used to denote any spatially varied light distribution, normally, but not necessarily, of light intensity, and its production or resulting distribution will be referred to by the term "display".

Furthermore, although the term "grey scale" is used herein as denoting a multi-level distribution, it should be made clear that the term is used in relation to any colour, including white. In addition, although the methods, arrays, backplanes, circuitry etc. of the invention and its embodiment are described in relation to a single colour (monochrome images), including white, it is envisaged that variable colour images or displays etc. will be produced in manners known per se, such as by spatially subdividing a single array into different colour pixels, superimposing displays from differently coloured monochrome arrays for example by projection, or temporal multiplexing, for example sequential projection of red green and blue images.

Temporally varying binary modulation to achieve a multiple intensity effect is known, and can be effected by the use of multiple bit planes. In such a scheme, an array of digitised values, of amplitudes corresponding to the grey scale values allocated to the pixels of the array, is decomposed into a multiplicity of bit planes. This multiple bit plane technique may be used with any binary spatial light modulator as defined above.

It is possible to decompose a n-level grey scale image into a plurality of binary image planes of equal duration, with a corresponding plurality of bit planes of equal duration. However, in a preferred form, known as a weighted bit plane technique, the durations of the bit planes are weighted, each bit plane being representative of one level (exponent) of the digitisation. This reduces the number of bit planes required to synthesise an image, and reduces addressing requirements somewhat. Examples of this technique are to be found in European Patent Application No. 0 774 745 (Matsushita Electronics), and JP 05 127612 (Nippon Hoso Kyokai).

Although in certain cases, it would be possible to use digital bases other than 2, this complicates matters insofar as each bit plane is not binary and thus is not so easily stored. Furthermore, each location of such a bit plane would then have more than one non-zero value, and the variation in non-zero values across the bit plane would need to be taken into account for the durations of operation of each pixel (possibly by further decomposing the non-binary plane to two or more binary planes). The discussion below will be limited to binary weighting, but the principles set out in such a context are believed to be sufficient to enable the skilled person to extrapolate to other exponential bases if required or desired.

Where the digitisation is binary, so that each bit plane is an array of digital 1s and 0s, it is then only necessary to display each bit plane for a total period proportional to its binary weighting to provide a time averaged image equivalent to the digitised grey scale image.

Where possible, it is convenient to display each binary bit plane once for the total duration necessary to contribute to the grey scale image, but it is also possible to display one or more of the bit planes a plurality of times, not necessarily sequentially, provided that the total time spent in displaying each bit plane, relative to the total time spent in displaying all the bit planes, is proportional to its binary weighting.

Recently there has been developed a novel spatial light modulator in the form of a smectic liquid crystal layer disposed between an active semiconductor backplane and a common front electrode. It was developed in response to a requirement for a fast and, if possible, inexpensive, spatial light modulator comprising a relatively large number of pixels (320 x 240 up to 640 x 480) with potential application not only as a display device, but also for other forms of optical processing such as correlation and holographic switching. Depending on the manner in which it is driven, and the value of the applied voltage, the modulator may be driven at a line rate of at least 10MHz and a frame rate of up to 15 to 20kHz, requiring a data input of around 1 to 1.5 Gpixel per second. Typically, while the pixel address time is around 100 nanoseconds, the pixel will actually take around 1 to 5 microseconds to switch between optical states; and while overall frame writing time is of the order of 24 microseconds, the frame to frame writing period is around 80 microseconds.

This spatial light modulator can be driven according to single pass schemes, in which the front electrode is placed at a potential of V/2 relative to the backplane pixels, which are switched to zero volts or V volts.

Alternatively it can be driven according to double pass schemes in which in one pass the front electrode is placed at zero volts and selected pixels are turned ON by switching pixel elements of the backplane array to V volts, and in the other pass the front electrode is placed at V volts and selected pixels are turned OFF by switching elements of the array to zero volts. For pixels which are not in the process of being switched the elements of the backplane follow the voltage of the front electrode. To maintain the same potential difference therebetween, the voltage at all backplane pixel elements of the array is simultaneously switched as the voltage on the front electrode is changed between zero and V volts.

Our copending International Patent Applications WO 0037994; WO 0037998; WO 0037997; WO 0037996; WO 0037999; WO 0038168; WO 0038162; WO 0038167; and WO 0038166) relate to other inventive aspects associated with this spatial light modulator, including the single and double pass schemes referred to in the preceding paragraph.

The aforesaid spatial light modulator is ideally suited to the use of the bit plane technique mentioned above. However, the present invention is not limited to liquid crystal modulators, but can be applied to any spatial light modulator as referred to above.

One problem which arises, particularly when operating liquid crystal display and modulators, is that of maintaining a dc balance at individual pixels. Initially, liquid crystal light modulators were in the form of a single cell comprising a layer of liquid crystal material sandwiched between opposed electrode bearing plates, at least one of the plates being transparent. Such cells were slow to operate and tended to have a short life due to degradation of the liquid crystal material. Quite early on it was recognised that the application of an average finite dc voltage to the liquid crystal cell was not beneficial, and at least in some cases produced degradation by electrolysis of the liquid crystal material itself, and schemes were evolved to render the average dc voltage to zero (dc balance).

It is now appreciated that other effects are also at work when a dc voltage is applied. When driving liquid crystal electro-optic devices for any length of time, a phenomenon known as image sticking may occur. Although the precise cause of this effect is unknown, there are theories that ions are trapped or a space charge is induced within the material in response to an overall dc field, and this results in a residual field even when the external dc field is removed.

It is evidently desirable that the time averaged voltage (that is, the average over the time that the voltage is actually being applied from an external source to the liquid crystal) applied to a liquid crystal material is zero, whether to avoid degradation or to avoid image sticking.

The present invention is directed to a weighted bit plane technique as described above in which at least some of the bit planes are modified. It has particular but not exclusive relevance to the production of effective grey scale intensity distributions for display purposes, where the effective duration of the binary images (length and/or number of repeats) is such that temporal integration thereof, for example by a viewer, gives the grey scale image. The methods of the invention find particular but not exclusive application to liquid crystal spatial light modulators.

The different bit planes for a grey scale image can be stored as sequential binary strings in a computer, and will be read out one at a time in any desired order after which they can be discarded unless the image needs to be repeated. It is computationally easiest to read out the bit planes in the order in which they have been stored, since then the only address which needs to be stored is the starting address of the first stored bit planes, all bit planes then being read out one at a time simply by clocking out a predetermined number of data bits in sequence for each bit planes.

It might be possible immediately to replace bit planes that have been read by the bit planes for a succeeding image, particularly where the bit planes are being produced in real time. However, under other circumstances this could be difficult, and the set of bit planes for a successive image will then normally be stored elsewhere. In certain cases it would be possible to provide storage for just two bit planes one of which is written while the other is being read, and vice versa.

It would also be possible to control the reading and/or writing processes so as to convert the image standards as desired, for example from line sequential to interlaced.

As or after each bit plane is read from memory, it is then written, e.g. using the single pass scheme described above, and viewed over a period corresponding to its weighting so that the eye synthesises the intended grey scale image. The single pass scheme is preferred insofar as it merely over-writes the preceding bit frame without the need for a second pass, the associated front electrode switching and blanking pulses. The avoidance of lost time between successive valid images enables continuous illumination and the easier provision of bit frames of an accurately weighted duration.

In such a scheme, each pixel is subjected to a series of voltage pulses according to the point in the grey scale it represents (as in the number representing the grey scale level, and usually but not necessarily in that order). There are more points in the grey scale than there are applications of voltages, due to the weighting employed, which is advantageous since it reduces the time spent actually driving the array. Each applied voltage may be of the same or opposed polarity compared to the preceding voltage, and the same number of voltage pulses, equal to the number of bit planes (ignoring polarity), is applied to each pixel to synthesise the image.

For example, in a 64 level grey scale with binary weighting, there will be 6 bit planes with relative durations of 2ⁿt where n ranges from 0 to 5, and each pixel can be represented by a corresponding 6 digit binary number.

However, double pass schemes could alternatively be adapted for use in multiple or weighted bit plane schemes.

To achieve dc balance, it would be possible to produce each binary bit plane by any binary imaging method which itself produces dc balance - for example by starting from a blank image, writing, viewing and erasing the binary image by selective energisation (+V) and driven blanking (-V) of selected pixels only.

However, in most or all of such schemes, the actual duration of the binary image is not directly proportional to the time allocated thereto, for example because of intervening blanking steps, etc., leading to a degree of distortion in the binary nature of the bit plane periods, and hence the perceived grey scale values. While this could be compensated for if desired, it represents an additional complication.

The present provides multiple or weighted bit plane apparatus and methods in which dc balance is approached or achieved in ways other than by employing dc balanced binary images per se, including the alteration of a number or numbers representing pixel intensity. Features and advantages of the invention will become clear upon a reading of the following description, and also upon a perusal of the appended claims to which the reader is directed.

For any selected pixel, each grey scale level can be represented by a binary number, and there are certain binary numbers which possess equal numbers of 0 and 1 digits, for example I 11000 and 010101. In these cases the average dc voltage over the 6 bit planes will be zero. Other binary numbers, such as 011000 and 010001 come close to this ideal, and others, in particular 111111 and 000000 are far removed therefrom.

Thus to achieve dc balance in such a scheme, another possibility is (a) to use only those numbers which by themselves achieve dc balance, or (b) at least to alter the grey scale numbers to closely adjacent numbers which closely approach dc balance. This permits use of a single or double pass scheme (see above, and also our copending applications WO 0038166 and WO 0038167), addressing all elements during each scan. Some of these schemes per se normally provide no inherent dc balance, and yet in this case dc balance or at least an approximation thereto can be obtained over the grey scale imaging time.

In operation according to the invention in the first instance (a), where the desired grey level differs, it is approximated by the nearest such number in value, for example 000110 becomes 000111, and 100010 becomes 100011. A drawback is that there can be significant distortion of the greyscale.

In the second instance (b); distortion of the greyscale can be reduced but at the expense of precise dc balance. For example, the number 001000 may become 001001, and 110111 may become 110110.

In either instance, unless further corrective steps are taken, extreme values of the grey scale will be omitted (e.g. replaced by an adjacent less extreme value), thus reducing or compressing the contrast range somewhat.

European Patent Application Serial No. 0 720 139 (Pioneer Electronic Corporation) discloses a method for correcting grey scale data for a weighted bit plane technique in which the numbers indicative of pixels intensity are altered in a manner intended to prevent false contouring which otherwise arises in a self luminous display, such as an electroluminescent or plasma display. In such a case, the alteration at any pixel can reduce, maintain or increase the inequality of 1s and 0s, and in the latter case dc balance will deteriorate further, and it is believed that false contouring is a problem peculiar to self-luminescent displays, as opposed to passive liquid crystal displays.

In a first aspect the invention provides a method of image signal processing in accordance with that claimed in claim 12.

In a second aspect the invention provides a method of writing a desired grey scale image to a display in accordance with that claimed in claim 13.

The methods according to the first and second aspects of the invention (and also that of the fourth aspect - see below) is in fact particularly useful when driving an array of liquid crystal pixels.

In a third aspect the invention provides light modulating apparatus in accordance with that claimed in claim 1.

In the weighted bit plane technique the driving means may provide from the image signal a group of n binary bit plane signals each representative of a respective digit from each of the set of numbers, i.e. a respective exponent of digitisation, and write the display with each bit plane signal at least once in a predetermined sequence and with predetermined timings to thereby write a desired grey scale image with integrated pixel intensities substantially corresponding to said image signal.

In a refinement, time averaging of both dc and grey scale level is performed over more than one frame, by suitable choice of the binary numbers. In this manner, dc balance can be closely approximated, or preferably attained, while the average grey scale level can be approximated or, preferably, maintained. For example, 110110 (27) could be replaced by 001110 (28) in a first frame and by 010110 (26) in second frame. The average grey scale level is 27 as desired, and both the binary numbers actually used provide dc balance per se.

In a more complicated example, the grey scale level 15 (111100) could be used twice together with an additional frame for grey level 14 (011100) and another additional frame for grey level 16 (000010), the frames in any desired order. Over the four frames the average grey level is 15, and there are equal numbers of binary 1s and 0s.

Accordingly in a fourth aspect the invention also provides a method in accordance with that claimed in claim 14. Preferably the inequality in said at least one pixel is eliminated. The average intensity over the plurality of frames is at least approximated, but preferably maintained.

In a fifth aspect the invention provides light modulating apparatus in accordance with that claimed in claim 2.

Again extremes of the grey scale are preferably omitted. If in either case, the full grey scale ranges are retained, dc balance can be periodically restored by other means, for example by applying corrective dc pulses as appropriate following a computer simulation of the dc imbalance which has accumulated, as mentioned above. However, this is not normally preferred, since it potentially involves using a number of corrective dc pulses equal in number to the number of bit planes which have been used, to allow for the possibility that at least one pixel has remained at an extreme grey scale value throughput the imaging period.

These ways of maintaining dc balance in grey scale imaging arise at least in part from the reduction in number of address steps compared with the number of grey scale levels. One way of deriving the grey scale value or combinations of grey scale values for use in operation of the multiple or weighted bit plane scheme, that is, replacing the input grey scale value derived from the intended image itself, is by means of a look-up table.

The weighted bit plane method as operated above does require that relaxation of the pixels is negligible over the duration of the longest bit plane, and this is not always possible, particularly in the case of liquid crystal pixels. In such a case, the bit planes can be refreshed during the bit plane period(s), but at the possible expense of dc balance. Nevertheless there are advantages in the ease of obtaining an accurately simulated grey scale.

Basically, a refresh step comprises repeating the application of the same voltage as was applied at the start of the bit plane so as to restore the switched state of the pixel. It may even be that the nth power binary weighted bit plane needs to be refreshed (2ⁿ⁻¹-1) times subsequent to the first writing so that a (2ⁿ - 1) greyscale will involve 2ⁿ⁻¹ frame writes of binary images when the refresh writing stages are included. However, the increasing number of writing steps makes it increasingly difficult to alter the bit frames according to the invention in the direction of providing dc balance, and in the limit of 2ⁿ⁻¹ frame writes (where the lowest order bit plane is the only one not refreshed), the present invention cannot be successfully applied.

However, there will be occasions where refreshing is only necessary with the longer duration bit planes. In such a case it would be again be possible to practice a method according to the present invention, using the actual binary numbers describing the pixel as previously described. However, a preferred method according to the invention is practised by taking determining the aggregate of the 1s and 0s occurring over the whole frame (single image method) or frames (plural image method), including the refreshed values, and altering the number for a pixel having an inequality of 1s and 0s so determined as to reduce the inequality. That is, that this preferred method acts on the binary numbers for each pixel as expanded according to the need to refresh.

For example, taking a simple example of pixels represented by a binary number comprising only four digits per pixel, where the first two, higher order, digits need to be refreshed, but the 3rd and 4th can be displayed without the need to refresh, it will be necessary to refresh the longest bit plane four times and the next longest twice. Taking the number 1001, this then becomes (1111)(00)01, where the brackets demarcate the original digits, having 5 unit values but only three zeros. Conversion of the original number to 1000 gives equality of values in the expanded number (11110000).

In the refresh scheme, bit planes are read out more than once, depending on the duration thereof. Thus it is not possible to discard the bit plane until it has undergone its final reading. Furthermore, if each bit plane is repeatedly read for the requisite number of times before proceeding to the next bitframe, it is necessary to store the starting address of the two bit planes.

For example, taking a simple case of three bit planes A, B and C, of relative durations 4t, 2t and t respectively, it would be possible to read these out in the order AAAABBC. However, this necessitates storing the start addresses of each of the bit planes, apart from frame C which is read only once, in order that the correct place for the refresh readout may be reached.

In addition, and perhaps more importantly, there are cases where it is necessary to rewrite the entire grey scale image before proceeding to a new image, where display times are long or relaxation is fast for example. In such a case it is necessary not only to store the start address of the bit plane next to be used, but also the start address of the first bit plane of the entire sequence, until that image information is no longer required.

An improved method of readout in such cases makes it possible to avoid the storage of a plurality of start addresses: At the high speeds involved in reading out the images when using the spatial light modulator of the preferred embodiment, this apparently minor step can be computationally significant and advantageous.

Essentially, a plurality of the highest order bit planes (or all the bit planes), are stored as binary strings in sequential locations in a memory, in decreasing order of intended duration (weighting), a predetermined number of read passes are made from the set of stored bit planes equal to the plurality of weighted bit planes, each pass commencing with the highest order bit plane and continuing along the stored bit planes in sequence, the lengths of the sequences being selected and varied such that at the end of the predetermined number of read passes each bit frame has been read out a plurality of times proportional to or equal to its duration (weighting). This general method of fast readout forms the subject of our copending International Patent Application WO 0038162 filed on the same day as this application.

Thus according to this scheme, the triple bitframe image exemplified above will be read out with read passes ABC (once), AB (once), and A (twice), which when combined can give an overall order, for example, of ABCABAA, or ABCAAAB or ABAAABC as desired. Only the start address needs to be stored since each read pass commences at the same place, and continues to an address determined by counters.

Where grey scale imaging is practised according to the invention, but with refreshing of a plurality of the highest order bit planes, it is possible to apply this fast readout method to the set comprising the bit planes which are refreshed plus the next lowest order bit plane. Any remaining lower order bit plane(s) which are not refreshed will be read out once, for duration(s) less than the lowest order bit plane of the set according to their weighting. This can be done at any time, including a period or periods within the reading out of the plurality, but is preferably performed before or after the entire set has undergone a fast readout.

While some of the grey scale and refresh schemes above automatically provide dc balance, a further option for schemes which do not do this is to allow dc imbalance to accumulate, for example while writing images and then allowing them to relax, calculating the imbalance (e.g. in an accompanying computer simulation), and then applying local dc voltages to the pixels of a magnitude and duration such as to provide zero average dc.

It should be understood that there have been references above to a liquid crystal cell incorporating an addressable array, the methods of the invention may be used in relation to any binary spatial light modulator. Where the imaging device is a liquid crystal device, prolongation of the binary images used to synthesise the grey scale image may be achieved in known manner by the application of a small ac field between successive binary images.

## Claims

1. Light modulating apparatus comprising an array of light modulating pixels and drive means adapted to drive the array to write a desired grey scale image by a weighted bit plane technique in response to an image signal representing a set of n-digit binary numbers defining the intended intensities of respective pixels of the array, n being an integer greater than one, wherein the driving means is arranged to alter the n-digit number in respect of at least one said pixel to a closely adjacent value
**characterised in that** the pixels are liquid crystal pixels, and said n-digit number is altered so that the numbers of 1s and 0s written thereat over said writing of a desired grey scale image are brought closer to equality whereby to improve the dc balance.

2. Light modulating apparatus comprising an array of liquid crystal pixels and drive means adapted to drive the array to write a desired grey scale image by a weighted bit plane technique in response to an image signal representing a set of n-digit binary numbers defining the intended intensities of respective pixels of the array, n being an integer greater than one,
wherein the driving means is arranged to write a plurality of successive grey scale frames approximating said desired grey scale image, each grey scale frame being written using a weighted bit plane technique
**characterised in that** the driving means is arranged to alter the n-digit number inin respect of at least one said pixel in at least one grey scale frame to a closely adjacent value so that the numbers of 1s and 0s written at said at least one said pixel over the plurality of grey scale frames are brought closer to equality whereby to improve the dc balance.

3. Display apparatus according to claim 2 wherein said driving means is arranged so that values of said number over said plurality of grey scale frames provide an average intensity at said at least one pixel substantially equal to the intended intensity.

4. Display apparatus according to claim 2 or claim 3 wherein said plurality of frames is two or four frames.

5. Display apparatus according to any preceding claim wherein said driving means is arranged so that said numbers of 1s and 0s written at said at least one said pixel are brought to equality.

6. Display apparatus according to any preceding claim wherein said driving means includes a look-up table for determining how said at least one number is to be altered.

7. Display apparatus according to any preceding claim wherein said driving means is arranged so that at least the weighted bit plane corresponding to the most significant digit of the numbers in said set is refreshed during the writing of said desired grey scale image.

8. Display apparatus according to claim 7 wherein said driving means is arranged so that a plurality m of the weighted bit planes corresponding to a like plurality of the most significant digits of the numbers in said set are refreshed during the writing of a desired grey scale image, where m is a positive integer at least 2 lower than n, and said driving means includes a memory and means for storing in said memory signals for the first plurality of bit planes as a corresponding first plurality of binary strings in sequential locations in said memory in decreasing order of significance of said significant digits, the drive means further including means arranged to make a succession of read cycles from the stored strings, each read cycle consisting of reading one or more of the stored strings in sequence as stored, commencing with the string for said most significant digit, the numbers of the strings read in the read cycles being varied so that at the end of the said succession of read cycles each string of the first plurality has been read out a plurality of times proportional to the exponent of its associated digit.

9. Display apparatus according to claim 8 wherein said storing means is arranged to store all of the bit plane signals as strings in sequential locations in said memory in decreasing order of significance of the associated digit.

10. Display apparatus according to claim 8 or claim 9 wherein said driving means is arranged to write bit planes not in said plurality once per said succession for periods determined by the exponents of their associated digits.

11. Display apparatus according to any preceding claim and including means for applying a small ac potential difference to pixels of the array in periods when bit planes are not being written to prolong the display.

12. A method of image signal processing for a weighted bit plane technique comprising the step of taking an image signal comprising a set of n-digit binary number signals each n-digit binary number indicative of the intended intensity level of a respective one of a corresponding array of binary pixels, wherein at least one said binary number has an inequality of 1s and 0s, and the step of altering the said at least one binary number to a closely adjacent value
**characterised in that** said method comprises the step of altering said at least one binary number reduce or remove the said inequality therein so as to improve dc balance across the array of pixels.

13. A method of writing a desired grey scale image to a display comprising the steps of taking an image signal representing a set of n-digit binary numbers each n-digit binary number indicative of the intended intensity level of a respective one of a corresponding array of binary pixels, and writing said desired grey scale image using a weighted bit plane technique, at least one said binary number being altered to a closely adjacent value
the method being **characterised in that** said binary number is altered such that over the writing of said desired grey scale image an inequality of 1s and 0s at the corresponding pixel is reduced or removed so as to improve dc balance across the array of pixels.

14. A method of writing a desired grey scale image to a display comprising to the steps of taking an image signal representing a set of n-digit binary numbers each n-digit binary number indicative of the intended intensity level of a respective one of a corresponding array of binary pixels, wherein at least one binary number produces an inequality of 1s and 0s at its pixel over the writing of a desired grey image, and writing said desired grey scale image using a weighted bit plane technique wherein a plurality of frames each approximating said desired grey scale image are written in succession
**characterised in that** the said at least one binary number is altered to a closely adjacent value in at least one of said plurality of frames so that over said succession the said inequality of 1s and 0s is reduced or removed so as to improve dc balance across the array of pixels.

15. A method according to claim 13 or claim 14 wherein at least one bit plane is refreshed during the writing of a said desired grey scale image.

## Patentansprüche

1. Lichtmoduliervorrichtung, die eine Anordnung von lichtmodulierenden Pixeln und eine Ansteuereinrichtung aufweist, die zur Ansteuerung der Anordnung in der Weise ausgebildet ist, dass sie ein gewünschtes Grauskalenbild durch ein Bitebenen-Verfahren mit Gewichtung unter Ansprechen auf ein Bildsignal schreibt, das einen Satz von n-ziffrigen Binärzahlen darstellt, welche die vorgesehenen Intensitäten der betreffenden Pixel der Anordnung festlegen, wobei n eine ganze Zahl größer als eins ist und wobei die Ansteuereinrichtung so ausgebildet ist, dass sie die n-ziffrige Binärzahl bezüglich mindestens eines solchen Pixels auf einen nahe benachbarten Wert ändert,
**dadurch gekennzeichnet, dass** die Pixel Flüssigkristallpixel sind und die n-ziffrige Zahl so geändert wird, dass die Anzahl der dort geschriebenen Werte 1 und die Anzahl der dort geschriebenen Werte 0 beim Schreiben eines gewünschten Grauskalenbildes näher an die Gleichheit gebracht werden, um **dadurch** die Ausgeglichenheit von 1 und 0 für den Gleichstrombetrieb zu verbessern.

2. Lichtmoduliervorrichtung, die eine Anordnung von Flüssigkristallpixeln und eine Ansteuereinrichtung aufweist, die zur Ansteuerung der Anordnung in der Weise ausgebildet ist, dass sie ein gewünschtes Grauskalenbild durch ein Bitebenen-Verfahren mit Gewichtung unter Ansprechen auf ein Bildsignal schreibt, das einen Satz von n-ziffrigen Binärzahlen darstellt, welche die vorgesehenen Intensitäten der betreffenden Pixel der Anordnung festlegen, wobei n eine ganze Zahl größer als eins ist und wobei die Ansteuereinrichtung so ausgebildet ist, dass sie eine Vielzahl aufeinanderfolgender Grauskalen-Frames schreibt, die eine Näherung des gewünschten Grauskalenbilds darstellen, wobei jeder Grauskalen-Frame unter Anwendung eines Bitebenen-Verfahrens mit Gewichtung geschrieben wird,
**dadurch gekennzeichnet, dass** die Ansteuereinrichtung so ausgebildet ist, dass sie die n-ziffrige Zahl bezüglich mindestens eines solchen Pixels in mindestens einem Grauskalen-Frame auf einen nahe benachbarten Wert so ändert, dass die Anzahl der Werte 1 und die Anzahl der Werte 0, die an diesem mindestens einen Pixel geschrieben werden, über die Vielzahl von Grauskalen-Frames näher an die Gleichheit gebracht werden, um **dadurch** die Ausgeglichenheit von 1 und 0 für den Gleichstrombetrieb zu verbessern.

3. Anzeigevorrichtung nach Anspruch 2, bei der die Ansteuereinrichtung so ausgebildet ist, dass die Werte dieser Zahl über die Vielzahl der Grauskalen-Frames eine mittlere Intensität an dem mindestens einen Pixel ergeben, die im wesentlichen gleich der vorgesehenen Intensität ist.

4. Anzeigevorrichtung nach Anspruch 2 oder 3, bei der die Vielzahl der Frames zwei oder vier Frames bedeutet.

5. Anzeigevorrichtung nach einem der vorhergehenden Ansprüche, bei der die Ansteuereinrichtung so ausgebildet ist, dass die Anzahl der Werte 1 und die Anzahl der Werte 0, die an diesem mindestens einen Pixel geschrieben werden, zur Gleichheit gebracht werden.

6. Anzeigevorrichtung nach einem der vorhergehenden Ansprüche, bei der die Ansteuereinrichtung zur Bestimmung, wie die mindestens eine Zahl zu ändern ist, eine Look-Up-Table aufweist.

7. Anzeigevorrichtung nach einem der vorhergehenden Ansprüche, bei der die Ansteuereinrichtung so ausgebildet ist, dass zumindest die gewichtete Bitebene, die der Ziffer mit der höchsten Wertigkeit der Zahlen in dem Satz entspricht, während des Schreibens des gewünschten Grauskalenbildes aktualisiert wird.

8. Anzeigevorrichtung nach Anspruch 7, bei der die Ansteuereinrichtung so ausgebildet ist, dass eine Vielzahl m der gewichteten Bitebenen, die einer gleichen Vielzahl der Ziffern mit der höchsten Wertigkeit der Zahlen in dem Satz entsprechen, während des Schreibens eines gewünschten Grauskalenbildes aktualisiert werden, wobei m eine positive ganze Zahl von mindestens 2 bedeutet, die kleiner als n ist, und die Ansteuereinrichtung einen Speicher sowie eine Speichereinrichtung zur Speicherung von Signalen für die erste Vielzahl von Bitebenen in diesem Speicher als entsprechende erste Vielzahl von binären Strings an sequentiellen Orten in diesem Speicher in der Reihenfolge abnehmender Wertigkeit der Ziffern mit höchster Wertigkeit aufweist und wobei die Ansteuereinrichtung ferner Mittel aufweist, die so ausgebildet sind, dass eine Abfolge von Lesezyklen zum Auslesen aus den gespeicherten Strings vorliegt, wobei jeder Lesezyklus aus dem Auslesen von einem oder mehreren der gespeicherten Strings in der gespeicherten Abfolge besteht, beginnend mit dem String für die Ziffer mit der höchsten Wertigkeit, und die Zahlen der in den Lesezyklen ausgelesenen Strings so variiert werden, dass am Ende der Abfolge von Lesezyklen jeder String der ersten Vielzahl in Proportionalität zum Exponenten seiner zugeordneten Ziffer mehrmals ausgelesen wurde.

9. Anzeigevorrichtung nach Anspruch 8, bei der die Speichereinrichtung so ausgebildet ist, dass sie sämtliche Bitebenen-Signale als Strings an sequentiellen Orten im Speicher in der Reihenfolge abnehmender Wertigkeit der zugeordneten Ziffer speichert.

10. Anzeigevorrichtung nach Anspruch 8 oder 9, bei der die Ansteuereinrichtung so ausgebildet ist, dass sie Bitebenen, die sich nicht in der Vielzahl befinden, für durch die Exponenten ihrer zugeordneten Ziffern bestimmte Zeitperioden einmal pro Abfolge schreibt.

11. Anzeigevorrichtung nach einem der vorhergehenden Ansprüche, die eine Einrichtung zum Anlegen einer kleinen Wechselstrom-Potentialdifferenz an Pixel der Anordnung in Zeitperioden aufweist, in denen keine Bitebenen geschrieben werden, um die Anzeige zu verlängern.

12. Verfahren zur Bildsignalverarbeitung für ein Bitebenen-Verfahren mit Gewichtung, das den Schritt der Aufnahme eines Bildsignals, das einen Satz von n-ziffrigen Binärzahlsignalen umfasst, wobei jede n-ziffrige Binärzahl das gewünschte Intensitätsniveau eines betreffenden Pixels einer entsprechenden Anordnung von binären Pixeln angibt und wobei mindestens eine dieser Binärzahlen hinsichtlich der Werte 1 und der Werte 0 Ungleichheit aufweist, sowie den Schritt der Änderung der mindestens einen Binärzahl auf einen nahe benachbarten Wert umfasst, **dadurch gekennzeichnet, dass** das Verfahren den Schritt der Änderung der mindestens einen Binärzahl unter Verminderung oder Beseitigung der Ungleichheit darin umfasst, um so die Ausgeglichenheit von 1 und 0 für Gleichstrombetrieb bei der Anordnung der Pixel zu verbessern.

13. Verfahren zum Schreiben eines gewünschten Grauskalenbüdes in eine Anzeige, das den Schritt der Aufnahme eines Bildsignals, das einen Satz von n-ziffrigen Binärzahlen darstellt, wobei jede n-ziffrige Binärzahl das gewünschte Intensitätsniveau eines betreffenden Pixels einer entsprechenden Anordnung von binären Pixeln angibt, und den Schritt des Schreibens des gewünschten Graukalenbildes unter Anwendung eines Bitebenen-Verfahrens mit Gewichtung umfasst, wobei mindestens eine dieser Binärzahlen auf einen nahe benachbarten Wert geändert wird,
**dadurch gekennzeichnet, dass** die Binärzahl so geändert wird,
dass beim Schreiben des gewünschten Grauskalenbildes eine Ungleichheit der Werte 1 und der Werte 0 an den entsprechenden Pixeln vermindert oder beseitigt wird, um so die Ausgeglichenheit von 1 und 0 für Gleichstrombetrieb bei der Anordnung der Pixel zu verbessern.

14. Verfahren zum Schreiben eines gewünschten Grauskalenbildes in eine Anzeige, das den Schritt der Aufnahme eines Bildsignals, das einen Satz von n-ziffrigen Binärzahlen darstellt, wobei jede n-ziffrige Binärzahl das gewünschte Intensitätsniveau eines betreffenden Pixels einer entsprechenden Anordnung von binären Pixeln angibt, wobei mindestens eine binäre Zahl eine Ungleichheit der Werte 1 und der Werte 0 an ihrem Pixel beim Schreiben eines gewünschten Graubildes erzeugt, und den Schritt des Schreibens des gewünschten Grauskalenbildes unter Anwendung eines Bitebenen-Verfahrens mit Gewichtung umfasst, wobei eine Vielzahl von Frames, die jeweils eine Näherung des gewünschten Grauskalenbildes darstellen, in einer Abfolge geschrieben werden,
**dadurch gekennzeichnet, dass** die mindestens eine Binärzahl in mindestens einem Frame der Vielzahl von Frames auf einen nahe benachbarten Wert geändert wird, sodass bei dieser Abfolge die Ungleichheit der Werte 1 und der Werte 0 vermindert oder beseitigt wird, um so die Ausgeglichenheit von 1 und 0 für Gleichstrombetrieb bei der Anordnung der Pixel zu verbessern.

15. Verfahren nach Anspruch 13 oder 14, bei dem mindestens eine Bitebene während des Schreibens des gewünschten Grauskalenbildes aktualisiert wird.

## Revendications

1. Appareil de modulation optique comprenant une matrice de pixels de modulation optique et un moyen d'attaque adapté à effectuer l'attaque de la matrice pour écrire une image en niveaux de gris souhaitée par une technique de plans de bits pondérés en réponse à un signal d'image représentant un ensemble de nombres binaires à n chiffres définissant les intensités visées de pixels respectifs de la matrice, n étant un entier supérieur à un, dans lequel le moyen d'attaque est conçu pour modifier le nombre à n chiffres par rapport à au moins un dit pixel à une valeur adjacente proche,
**caractérisé en ce que** les pixels sont des pixels de cristaux liquides, et ledit nombre à n chiffres est modifié de telle sorte que les nombres de 1 et de 0 qui y sont écrits après ladite écriture d'une image en niveaux de gris souhaitée soient amenés à proximité de l'égalité, ce qui permet d'améliorer l'équilibre en courant continu.

2. Appareil de modulation optique comprenant une matrice de pixels de cristaux liquides et un moyen d'attaque adapté à effectuer l'attaque de la matrice pour écrire une image en niveaux de gris souhaitée par une technique de plans de bits pondérés en réponse à un signal d'image représentant un ensemble de nombres binaires à n chiffres définissant les intensités visées de pixels respectifs de la matrice, n étant un entier supérieur à un,
dans lequel le moyen d'attaque est conçu pour écrire une pluralité d'images en niveaux de gris successives s'approchant de ladite image en niveaux de gris souhaitée, chacune des images en niveaux de gris étant écrite en utilisant une technique de plans de bits pondérés, **caractérisé en ce que** le moyen d'attaque est conçu pour modifier le nombre à n chiffres par rapport à au moins un dit pixel dans au moins une image en niveaux de gris à une valeur adjacente proche de telle sorte que les nombres de 1 et de 0 écrits dans ledit au moins un dit pixel par-dessus la pluralité d'images en niveaux de gris soient amenés à proximité de l'égalité, ce qui permet d'améliorer l'équilibre en courant continu.

3. Appareil d'affichage selon la revendication 2 dans lequel ledit moyen d'attaque est conçu de telle sorte que les valeurs dudit nombre au dessus de ladite pluralité d'images en niveaux de gris produisent une intensité moyenne sur ledit au moins un pixel pratiquement égale à l'intensité visée.

4. Appareil d'affichage selon la revendication 2 ou la revendication 3 dans lequel ladite pluralité d'images est de deux ou quatre images.

5. Appareil d'affichage selon l'une quelconque des revendications précédentes, dans lequel ledit moyen d'attaque est conçu de telle sorte que lesdits nombres de 1 et de 0 écrits dans ledit au moins un dit pixel soient amenés à égalité.

6. Appareil d'affichage selon l'une quelconque des revendications précédentes, dans lequel ledit moyen d'attaque inclut une table de valeurs pour déterminer de quelle manière ledit au moins un nombre doit être modifié.

7. Appareil d'affichage selon l'une quelconque des revendications précédentes dans lequel ledit moyen d'attaque est conçu de telle sorte qu'au moins le plan de bits pondérés correspondant au chiffre le plus significatif des nombres dans ledit ensemble soit rafraîchi pendant l'écriture de ladite image en niveaux de gris souhaitée.

8. Appareil d'affichage selon la revendication 7 dans lequel ledit moyen d'attaque est conçu de telle sorte qu'une pluralité m des plans de bits pondérés correspondant à une pluralité similaire des chiffres les plus significatifs des nombres dans ledit ensemble soit rafraîchie pendant l'écriture d'une image en niveaux de gris souhaitée, où m est un entier positif au moins inférieur de 2 à n, et ledit moyen d'attaque inclut une mémoire et un moyen de stockage dans lesdits signaux de mémoire de la première pluralité de plans de bits sous la forme d'une première pluralité correspondante de chaînes binaires dans des emplacements consécutifs de ladite mémoire par ordre décroissant de poids desdits chiffres significatifs, le moyen d'attaque incluant en outre un moyen conçu pour effectuer une succession de cycles de lecture à partir des chaînes stockées, chacun des cycles de lecture consistant à lire une ou plusieurs des chaînes stockées en séquence telles qu'elles sont stockées, en commençant par la chaîne du chiffre le plus significatif, les nombres des chaînes lues au cours des cycles de lecture variant de telle sorte que, à la fin de ladite succession de cycles de lecture, chacune des chaînes de la première pluralité ait été lue à une pluralité de reprises proportionnellement à l'exposant de son chiffre associé.

9. Appareil d'affichage selon la revendication 8, dans lequel ledit moyen de stockage est conçu pour stocker tous les signaux de plans de bits sous la forme de chaînes dans des emplacements consécutifs de ladite mémoire par ordre décroissant de poids du chiffre associé.

10. Appareil d'affichage selon la revendication 8 ou la revendication 9, dans lequel ledit moyen d'attaque est conçu pour ne pas écrire des plans de bits dans ladite pluralité une fois par dite succession pendant des périodes déterminées par les exposants de leurs chiffres associés.

11. Appareil d'affichage selon l'une quelconque des revendications précédentes, et incluant un moyen permettant d'appliquer une faible différence de potentiel alternative aux pixels de la matrice au cours de périodes où les plans de bits ne sont pas soumis à une écriture pour prolonger l'affichage.

12. Procédé de traitement de signal d'image pour une technique de plans de bits pondérés comprenant l'étape consistant à prendre un signal d'image comprenant un ensemble de signaux de nombres binaires à n chiffres, chacun des nombres binaires à n chiffres étant indicatif du niveau d'intensité visé d'un pixel respectif d'une matrice correspondante de pixels binaires, dans lequel au moins un dit nombre a une inégalité de 1 et de 0, et l'étape consistant à modifier ledit au moins un nombre binaire à une valeur adjacente proche est **caractérisée en ce que** le procédé comprend l'étape consistant à modifier ledit au moins un nombre binaire pour réduire ou éliminer ladite inégalité qui s'y trouve afin d'améliorer l'équilibre en courant continu dans la matrice de pixels.

13. Procédé d'écriture d'une image en niveaux de gris souhaitée sur un afficheur comprenant les étapes consistant à prendre un signal d'image représentant un ensemble de nombres binaires à n chiffres, chacun des nombres binaires à n chiffres étant indicatif du niveau d'intensité visé d'un pixel respectif d'une matrice correspondante de pixels binaires, et à écrire ladite image en niveaux de gris souhaitée en utilisant une technique de plans de bits pondérés, au moins un dit nombre binaire étant modifié à une valeur adjacente proche, le procédé étant **caractérisé en ce que** ledit nombre binaire est modifié de telle sorte que, par-dessus l'écriture de ladite image en niveaux de gris souhaitée, une inégalité de 1 et de 0 dans le pixel correspondant soit réduite ou éliminée afin d'améliorer l'équilibre en courant continu dans la matrice de pixels.

14. Procédé d'écriture d'une image en niveaux de gris souhaitée sur un afficheur comprenant les étapes consistant à prendre un signal d'image représentant un ensemble de nombres binaires à n chiffres, chacun des nombres binaires à n chiffres étant indicatif du niveau d'intensité visé d'un pixel respectif d'une matrice correspondante de pixels binaires, dans lequel au moins un nombre binaire produit une inégalité de 1 et de 0 pour son pixel après l'écriture d'une image en niveaux de gris souhaitée, et à écrire ladite image en niveaux de gris souhaitée en utilisant une technique de plans de bits pondérés dans lequel une pluralité d'images approchant chacune ladite image en niveaux de gris souhaitée est écrite successivement, **caractérisé en ce que** le dit au moins un nombre binaire est modifié à une valeur adjacente proche dans au moins une des images de la pluralité d'images de telle sorte que, par-dessus la dite succession, ladite inégalité de 1 et de 0 soit réduite ou éliminée afin d'améliorer l'équilibre en courant continu dans la matrice de pixels.

15. Procédé selon la revendication 13 ou la revendication 14, dans lequel au moins un plan de bits est rafraîchi pendant l'écriture de ladite image en niveaux de gris souhaitée.
